# EUROPEAN PATENT APPLICATION

(11) **EP 4 635 854 A1**
(43) Date of publication of application: **22.10.2025**
(21) Application number: 24382404.2
(22) Date of filing: 17.04.2024
(51) Int. Cl.: B64D 37/02, B64D 37/32, B64D 37/34

(54) **METHOD FOR MAINTAINING PRESSURE IN A FUEL TANK**

(71) Applicant: Airbus Operations, S.L.U., 28906 Getafe (Madrid) (ES)
(72) Inventor: RAVENEAU, Guillaume, 31060 Toulouse (FR)
(74) Representative: ABG Intellectual Property Law, S.L.

(57) **Abstract**

The present invention belongs to the field of aircraft engines, and particularly, it belongs to a method for maintaining pressure in a fuel tank of a fuel consuming system of an aircraft and a fuel distribution system thereof.

## Description

### FIELD OF THE INVENTION

The present invention belongs to the field of aircraft engines, and particularly, it belongs to a method for maintaining pressure in a fuel tank of a fuel consuming system of an aircraft and a fuel distribution system thereof.

### PRIOR ART

In recent years, the aviation industry has undergone a concerted effort to explore alternative fuels and propulsion systems as part of a broader initiative to mitigate the environmental impact of air travel. In that sense, a particularly promising candidate is the implementation of di-hydrogen (in the following "hydrogen") as an aviation fuel. The combustion of hydrogen results in the emission of mainly water vapor, positioning it as a clean and environmentally friendly energy source.

However, the practical incorporation of hydrogen into aviation as a fuel source still presents technical challenges. One of these relevant challenges is the effective storage of hydrogen, due to its specific storage conditions and characterized by its low energy density by volume. These tanks, predominantly constructed from steel or aluminum based materials, demand a meticulous balance between structural integrity, weight efficiency, and safety considerations. At the same time, fuel storage tanks must comply with the hydrogen storage conditions such as temperature, volume, pressure and state.

The integration of hydrogen storage systems into aircraft architectures presents an additional layer of complexity. One of the goal is to seamlessly incorporate these specialized fuel storage tanks into the fuselage, ensuring not only structural durability but also optimizing weight distribution and addressing logistical aspects related to the refueling procedures.

Continuous innovation in materials and design stands at the forefront of hydrogen aviation research. Engineers are committed to refining the performance of hydrogen storage systems and heat exchangers, focusing on improvements in efficiency, weight reduction, complying with pressure and temperature required conditions, and overall reliability to meet the important demands of aeronautical applications.

However, and mostly while in-flight, the specific storage conditions and injection of hydrogen require conditioning prior to being consumed by the engine of an aircraft. In some cases, a secondary hydrogen flow, unfit for the propulsive system, may be generated for cryogenic cooling. This secondary hydrogen flow cannot be used for propulsion.

Therefore, there is a need in the art for a method and a fuel distribution system for maintaining pressure in a fuel tank of a fuel consuming system of an aircraft which may help recycling and consume, in an optimal manner, as much hydrogen as possible with respect to the quantity initially filled-up before entering in-flight conditions. Also, there is a need in the art for a fuel distribution system which helps maintaining the pressure inside a fuel tank as the fuel of said fuel tank is gradually consumed during flight and, at the same time, guaranteeing a minimal waste of fuel.

### DESCRIPTION OF THE INVENTION

The present invention provides a method for maintaining pressure in a fuel tank of an aircraft according to claim 1, a fuel distribution system according to claim 10 and an aircraft comprising the fuel distribution system according to claim 15. Dependent claims disclose particular embodiments of each inventive aspect of the present invention.

In the context of the invention, the term "upstream" relates to a first element placed before a second element when taking into account the direction of a flow. In the invention, a recirculated fuel mass flow is redirected from a distribution line, suitable for feeding a fuel consuming system, towards a fuel tank. Therefore, referring to "the heat exchanger being located upstream the fuel tank inlet" means that the heat exchanger is placed ahead of the fuel tank inlet with respect to this fuel recirculation. Based on the same analogy, referring to "the pressure regulating means being located upstream the heat exchanger" means that the pressure regulating means are placed ahead of the heat exchanger inlet.

On the contrary, the term "downstream" is used to refer to a first element which is placed after a second element when taking into account the direction of a flow. In most of the cases, if the first element is located downstream the second element, then the first element is placed after/at the outlet of the second element.

In a first inventive aspect, the present invention provides a method for maintaining pressure in a fuel tank of an aircraft, the fuel tank being suitable for feeding a fuel consuming system through a distribution line, the fuel tank having an inlet and an outlet, wherein the method comprises the steps of:
a) injecting a first recirculated fuel mass flow from the distribution line of the fuel consuming system to a heat exchanger by means of a first recirculation duct, the heat exchanger having an inlet and an outlet,
b) determining a pressure value P_{T} inside the fuel tank,
c) determining a first temperature value T₁ of the first recirculated fuel mass flow at the fuel tank inlet,
d) processing the pressure value P_{T} and the first temperature value T₁ by means of controlling means,
e) providing heat to the first recirculated fuel mass flow by means of the heat exchanger, and
f) injecting the first recirculated fuel mass flow outputted of the heat exchanger back into the fuel tank,
wherein the method further comprises:
while the first temperature value T₁ is between a first temperature threshold T_{TH1} and a second temperature threshold T_{TH2}:
- raising the power delivered by the heat exchanger if the pressure P_{T} is lower than a determined pressure target P_{TA}, or
- lowering the power delivered by the heat exchanger if the pressure P_{T} is higher than the determined pressure target P_{TA}.

The method of the first inventive aspect of the invention aims to maintain pressure in a fuel tank of a fuel consuming system of an aircraft as the tank empties during the flight and may be subject to specific conditions such as for example sloshing.

In an embodiment, the fuel tank is a subcooled fuel tank which provides specific storage temperature conditions lower than the saturation temperature of the stored fuel.

In particular, the method of the invention allows to perform a recirculation of a first recirculated fuel mass flow considered unfit for feeding the fuel consuming system of the aircraft. The term "unfit" refers to a fuel mass flow which does not comply with temperature and pressure requirements for injection into the fuel consuming system.

In the present document, the term "propulsive system" can also be used to characterize the "fuel consuming system".

In step a) of the method of the invention, a first recirculated fuel mass flow is injected from a distribution line of the fuel consuming system to a heat exchanger. The distribution line is previously fed with a required quantity of fuel from a fuel tank in which a predetermined quantity is stored. In particular, the predetermined quantity of fuel stored inside the fuel tank depends on the quantity which has been refueled while the aircraft is on ground.

Thanks to the first step of the method of the invention, a first recirculated fuel mass flow is drawn off the distribution line, preferably a portion of the recirculated fuel mass flow which is unfit to be injected in the fuel consuming system of the aircraft, and said fuel mass flow is directed towards the inlet of a heat exchanger by means of a first recirculation duct. The first recirculation duct is in fluidic communication with both the distribution line and the inlet of the heat exchanger. In an embodiment, the first recirculation duct is a tapering duct.

Also, the first recirculated fuel mass flow deflected from the distribution line towards the heat exchanger is either an uncontrolled or a constant mass flow which means that the method of the invention is applicable without necessarily controlling or measuring the quantity of recirculated fuel mass flow. Advantageously, the present invention does not require to control the fuel mass flow in order to match the necessary pressure conditions but allows to reach the required pressure by modulating the heat transferred to said fuel mass flow available.

During step b), a pressure sensor located inside the fuel tank helps determining the pressure P_{T} inside said fuel tank. The pressure P_{T} is a value which corresponds to the pressure at which the fuel located inside the fuel tank is required to be stored.

In step c), a temperature sensor located at the fuel tank inlet helps determining a first temperature T₁ of the first recirculated fuel mass flow. Said first temperature T₁ is the temperature of the first recirculated fuel mass flow after exiting the heat exchanger and right before injecting the first recirculated fuel mass flow back into the fuel tank.

During step d), the controlling means processes the pressure value P_{T} and the first temperature T₁, respectively determined by the pressure sensor and the temperature sensor.

During step e) of the method of the present invention, heat is provided to the first recirculated fuel mass flow by means of the heat exchanger. Based on the processing of the pressure value P_{T} and the first temperature value T₁ by the controlling means, and while the first temperature value T₁ is between a first temperature threshold T_{TH1} and a second temperature threshold T_{TH2}, the method of the invention also comprises the steps of:
- raising the power delivered by the heat exchanger if the pressure P_{T} is lower than a determined pressure target P_{TA}, or
- lowering the power delivered by the heat exchanger if the pressure P_{T} is higher than the determined pressure target P_{TA}.

The first temperature threshold T_{TH1} is predetermined and is equal to the lower temperature threshold which corresponds to the condensation point of the fuel stored in the fuel tank. The second temperature threshold T_{TH2} is predetermined and is equal to the higher temperature threshold which corresponds to the admissible temperature so that the fuel stored in the tank does not exceed standard storage conditions for said particular fuel.

In an embodiment, the pressure target P_{TA} is maintained around 4 bar (400 000 Pa).

In an embodiment, the second temperature threshold T_{TH2} is around 150K.

In an embodiment, the first temperature threshold T_{TH1} is between 20 to 25K.

Thus, if the pressure P_{T} measured inside the fuel tank is lower than the determined pressure target P_{TA}, the power delivered by the heat exchanger to the first recirculated fuel mass flow is raised so that, when said first recirculated fuel mass flow is injected back into the fuel tank, said first recirculated fuel mass flow helps increasing the pressure inside the fuel tank when reinjected.

On the contrary, if the pressure P_{T} measured inside the fuel tank is higher than the determined pressure target P_{TA}, the power delivered by the heat exchanger to the first recirculated fuel mass flow is lowered so that, when said first recirculated fuel mass flow is injected back into the fuel tank, said first recirculated fuel mass flow helps decreasing the pressure inside the fuel tank when reinjected. In particular, decrease of the pressure inside the fuel tank is obtained thanks to the fuel mass flow drained out of the tank and thanks to a limited pressure increase obtained by reinjection of the fuel mass flow.

During step f), the recirculated fuel mass flow is outputted of the heat exchanger and injected back into the fuel tank.

In operating conditions, the fuel initially stored inside the fuel tank is maintained at a specific temperature value and at a specific pressure value P_{T}. When the fuel starts being injected from the fuel tank to the distribution line through the fuel tank outlet, the pressure value P_{T} decreases due to the emptying of the fuel tank. Therefore, the method of the present invention helps maintaining a substantially constant pressure in the fuel tank by reinjecting a recirculated fuel mass flow and by modifying the temperature of the recirculated fuel mass flow so that the pressure of the fuel tank is actively maintained and the reinjection of the recirculated fuel mass flow has a positive impact on the pressurization of the fuel tank while the aircraft is in use.

The method of the invention allows to use an unfit part of the fuel mass flow drawn from the tank instead of flaring it or venting it outside the aircraft which results in losing part of the fuel initially stored in the fuel tank. The present method also avoids to send the unfit part of the fuel mass flow back to the fuel tank without any added value. In that sense, the method of the first inventive aspect of the invention helps maintaining the pressure inside the fuel tank substantially constant by regulating the temperature of the first recirculated fuel mass flow injected back into the fuel tank so that the first recirculated fuel mass flow is mostly stored again in optimal conditions. Furthermore, the present invention allows the unfit fuel mass flow to be reused and conditioned again so that, in most cases, the recirculated fuel mass flow is allowed to be reinjected back into the distribution line once its pressure, temperature and state are back to optimal conditions for its use by a fuel consumer.

In an embodiment, if the first temperature value T₁ is lower than the first temperature threshold T_{TH1}, the method further comprises the steps of:
- raising the power delivered to the heat exchanger if the pressure P_{T} is lower than, or equal to, a predetermined pressure value Pₘₐₓ, or
- releasing to atmosphere at least part of the first recirculated fuel mass flow if the pressure P_{T} is higher than a predetermined pressure value Pₘₐₓ.

If the first recirculated fuel mass flow is excessive with respect to the fuel tank capacity, the fuel tank pressure P_{T} may rise above the predetermined pressure value Pₘₐₓ. In this case, the recirculated fuel mass flow is released to atmosphere, flared or vented out, in order to maintain the fuel tank pressure below the predetermined pressure value Pₘₐₓ.

Advantageously, the present embodiment of the invention helps avoiding sudden modification of the pressure P_{T} inside the fuel tank which would happen if the recirculated fuel mass flow were injected at a temperature below the first temperature threshold T_{TH1}.

In particular, the predetermined pressure value Pₘₐₓ is higher than the determined pressure target P_{TA}. The predetermined pressure value Pₘₐₓ is determined based on the mechanical characteristics of the tank.

In an embodiment, the predetermined pressure value Pₘₐₓ is around 5 bar (500 000 Pa).

As soon as P_{T} reaches Pₘₐₓ, part or all of the recirculated H₂ is vented, so that the tank's pressure does not exceed Pₘₐₓ. In an embodiment, the release to the atmosphere of at least part of the first recirculated fuel mass flow is performed by means of a valve. In the field of technique of the invention, releasing a mass flow to the atmosphere is also called flaring or venting.

Also advantageously, the present embodiment of the method of the invention helps ensuring that a first recirculated fuel mass flow having a first temperature value T₁ lower than the first temperature threshold T_{TH1}, is reinjected in optimal conditions into the fuel tank when its pressure P_{T} is below the predetermined pressure value Pₘₐₓ. Therefore, the present method helps recycling fuel mass flow that might be considered unfit and avoids losing fuel mass flow.

In an embodiment, if the first temperature value T₁ is lower than the first temperature threshold T_{TH1}, the method further comprises the step of:
- lowering the power delivered by the heat exchanger until the pressure P_{T} is lower than the determined pressure target P_{TA}.

In this embodiment, the fuel tank is configured to receive the re-injection of the first recirculated fuel mass flow as a mixture of fuel in liquid and gas state due to its lower temperature value T₁ with respect to the first temperature threshold T_{TH1}.

The liquid part of the recirculated fuel mass flow reinjected into the fuel tank reduces the gas temperature in the ullage of said fuel tank if the temperature of the fuel in gas state is above saturation. As a consequence, the liquid part of the recirculated fuel mass flow reinjected into the fuel tank tends to reduce the pressure P_{T} of said fuel tank.

Also, the liquid part of the recirculated fuel mass flow reinjected into the fuel tank is deposited over the fuel in liquid state already present into the fuel tank as an upper layer. Said reinjected fuel in liquid state has a low impact on the increase of the pressure P_{T} compared to the effects of an injection in gas form. The reinjected fuel in liquid state and deposited as an upper layer is considered not usable for feeding the distribution line again except if said liquid fuel is mixed with a fuel having a colder temperature during flight. That is, for example, said part of the fuel which is in liquid state could be recovered for a next flight after refueling on-ground in between flights and benefits from the mixing of the liquid fuel already located inside the fuel tank with the colder fuel injected into the fuel tank during refueling.

In an embodiment, if the first temperature value T₁ is higher than the second temperature threshold T_{TH2}, the method further comprises the step of:
- increasing the flow of the first recirculated fuel mass flow by means of flow regulating means located upstream the heat exchanger until the first temperature value T₁ is lower than the first threshold.

By maintaining the temperature delivered by the heat exchanger at the same level and increasing the flow of recirculated fuel mass flow, the additional step of the present embodiment of the method allows limiting the temperature value T₁ of the fuel located inside the fuel tank while the pressure P_{T} is controlled and maintained around the determined pressure target P_{TA}.

In an embodiment, before step e), the method further comprises the step of:
regulating the pressure and/or the flow of the first recirculated fuel mass flow by means of pressure regulating means located upstream the heat exchanger.

In an embodiment, the pressure regulating means is a pressure regulating valve.

In an embodiment, the pressure regulating means is a safety valve which allow reducing the pressure of the first recirculated fuel mass flow by immediately release fuel to the atmosphere in the event of an emergency or in case of failure.

Advantageously, the pressure regulating means helps adapting the pressure of the first recirculated fuel mass flow before entering the heat exchanger. The pressure regulating means ensures that the heat exchanger is not damaged due to the first recirculated fuel mass flow conditions.

In an embodiment, the pressure regulating means helps decreasing the pressure of the first recirculated fuel mass flow injection into the heat exchanger. In an embodiment, the pressure regulating means helps increasing the pressure of the first recirculated fuel mass flow injection into the heat exchanger.

In an embodiment, the method further comprises the step of providing fuel from the fuel tank to the distribution line by means of a fuel pump located downstream the outlet of the fuel tank, the fuel pump comprising a secondary circuit in fluidic communication with the first recirculation duct.

The fuel pump supplies fuel from the fuel tank to the distribution line and also rising the pressure of said fuel before entering the fuel consuming system.

Advantageously, the secondary circuit helps deviating part of the fuel mass flow provided from the fuel tank to the distribution line towards the first recirculation duct.

In an embodiment, the method further comprises the step of:
- providing a second recirculated fuel mass flow by means of a second recirculation duct, and
- feeding the heat exchanger inlet with the first recirculated fuel mass flow and the second recirculated fuel mass flow.

Advantageously, the second recirculated fuel mass flow is outputted from the distribution line by means of a second recirculation duct. Preferably, the second recirculated duct is a tapering duct.

In this embodiment, part of the fuel to be injected in the fuel consuming system is redirected towards the heat exchanger, that is, the second recirculated fuel mass flow. The second recirculated fuel mass flow is combined and mixed with the first recirculated fuel mass flow in order to form only one recirculated fuel mass fuel which is injected into the heat exchanger.

The second recovery duct is in fluidic communication with both the distribution line, the first recovery duct and, by extension, with the heat exchanger.

Also advantageously, in an embodiment, both the first recirculated fuel mass flow and the second recirculated fuel mass flow are directed towards the pressure regulating means before entering the heat exchanger.

In an embodiment, an additional recirculated fuel mass flow is drawn off the distribution line towards the heat exchanger from a point of the distribution line which is downstream to the point from which the first recirculated fuel mass flow is drawn off. That is, in said embodiment, three recirculated fuel mass flows having different conditions, that is different temperature and/or pressure values, are mixed together and redirected towards the heat exchanger. Advantageously, mixing more than two fuel mass flows at different temperature and pressure conditions helps adapting the conditions of the recirculation fuel mass flow reinjected back into the fuel tank.

In an embodiment, the method further comprises the step of providing a plurality of recirculated fuel mass flow by means of a plurality of respective recirculation duct, and feeding the heat exchanger inlet with the plurality of recirculated fuel mass flow. In this embodiment, the plurality of recirculated fuel mass flow are in fluidic communication with the distribution line and also with the heat exchanger.

Overall, in the present document, if the method comprises the step of providing a plurality of recirculated fuel mass flow, thus, said plurality of fuel mass flow is combined in one recirculated fuel mass flow before being injected into the heat exchanger by means of a common recirculation duct towards all the plurality of recirculation duct converges. Then, the available recirculated fuel mass flow to be injected back into the fuel tank is the addition of plurality of recirculated fuel mass flow. In some embodiment, the total quantity of recirculated fuel mass flow is the addition of plurality of recirculated fuel mass flow excluding the quantity of recirculated fuel mass flow release to atmosphere through flaring.

In an embodiment, before step c), the method further comprises the step of: determining the value of the first and/or the second recirculated fuel mass flow, and during step d), the method further comprises the step of processing the value of the first and/or the second recirculated fuel mass flow by means of the controlling means (6).

Advantageously, determining and processing the value of the first and/or the second recirculated fuel mass flow helps monitoring and maintaining the pressure in the fuel tank in a more precise manner. By determining and processing the value of the first and/or second recirculated fuel mass flow, the controlling means are able to actuate on the heat exchanger in such a way that the increase and decrease of power are based on more data which improves overall precision.

In an embodiment, the fuel is hydrogen. In a more particular embodiment, the fuel is di-hydrogen (H₂).

In an embodiment, the recirculated fuel mass flow injected into the heat exchanger is liquid hydrogen, gas hydrogen or a mix of liquid hydrogen and gas hydrogen.

In particular, a mix of liquid hydrogen and gas hydrogen is contemplated in the fuel tank in operating conditions and when a recirculated fuel mass flow is reinjected back into the fuel tank. At that point, part of the fuel tank is filled with liquid hydrogen which is the initial state of the fuel injected during refueling operation while on-ground. At the same time, the recirculated fuel mass flow reinjected back into the fuel tank through the inlet of the fuel tank is either in a liquid state or in a gaseous state based on the temperature at which the recirculated fuel mass flow is reinjected.

In an embodiment, the fuel is in supercritical state. In particular, a supercritical fluid (SCF) is a highly compressed fluid that combines the properties of gases and liquids.

In an embodiment, the fuel consuming system comprises an engine and/or a fuel cell.

Fuel cells are electrochemical cells which converts chemical energy of the fuel, preferably hydrogen, into electricity.

In a second inventive aspect, the present invention provides a fuel distribution system for an aircraft comprising:
- a fuel tank having a fuel tank inlet and a fuel tank outlet, the fuel tank being configured for storing fuel at a pressure value P_{T} and the fuel tank outlet being fluidically connected to a distribution line suitable for feeding a fuel consuming system of an aircraft,
- a first recirculation duct configured for injecting a first recirculated fuel mass flow from the distribution line to a heat exchanger,
- the heat exchanger, having an inlet and an outlet, located upstream the fuel tank inlet and being configured for providing heat to the first recirculated fuel mass flow provided from the distribution line,
- a temperature sensor adapted to measure a first temperature value T₁ of the first recirculated fuel mass flow upstream the fuel tank inlet,
- a pressure sensor adapted to measure a pressure value P_{T} inside the fuel tank,
- controlling means configured for processing the pressure P_{T} and the first temperature T₁ values and, while the first temperature value T₁ is between a first temperature threshold T_{TH1} and a second temperature threshold T_{TH2}, the controlling means are further configured for:
   ∘ raising the power delivered by the heat exchanger if the pressure P_{T} is lower than a determined pressure target P_{TA}, or
   ∘ lowering the power delivered by the heat exchanger if the pressure P_{T} is higher than the determined pressure target P_{TA}.

The fuel distribution system of the second inventive aspect of the invention aims to provide a technical solution for maintaining the pressure in the fuel tank of a fuel consuming system.

In an embodiment, the fuel tank is a subcooled fuel tank which provides specific storage temperature conditions lower than the saturation temperature of the fuel.

In particular, the fuel distribution system of the second inventive aspect allows to perform a recirculation of a first recirculated fuel mass flow which has been considered unfit for feeding the fuel consuming system of the aircraft by means of a first recirculation duct.

The first recirculation duct is in fluidic communication with both the distribution line and the inlet of the heat exchanger.

Also, the fuel distribution system of the invention helps recirculating the recirculated fuel mass flow in order to avoid venting it to atmosphere, thereby sparing a substantial quantity of fuel while in-flight. In that sense, the fuel distribution system of the second inventive aspect of the invention helps maintaining pressurization inside the fuel tank substantially constant mainly by actuating on the temperature of the recirculated fuel mass flow reinjected back into the fuel tank by means of a heat exchanger so that the recirculated fuel mass flow is finally stored in optimal conditions back into the fuel tank instead of being vented out in its totality or being recirculated towards the fuel tank impacting negatively the fuel temperature.

The first recirculated fuel mass flow is drawn off the distribution line and redirected towards the heat exchanger, preferably said first recirculated fuel mass flow is unfit to be injected in the fuel consuming system of the aircraft. The distribution line is suitable for feeding a fuel consuming system of an aircraft and in fluidic communication with the first recirculation duct and, thus, with the inlet of the heat exchanger.

Also, the first recirculated fuel mass flow drawn off the distribution line and redirected towards the inlet of the heat exchanger is an uncontrolled mass flow which means that the fuel distribution system of the invention is applicable without monitoring or measuring said recirculated fuel mass flow. That is, the fuel distribution system of the invention is able to maintain the pressure in the fuel tank only by actuating on the temperature of the first recirculated fuel mass flow while in operative conditions.

The pressure sensor is located inside the fuel tank and helps determining the pressure value P_{T} inside said fuel tank. The pressure value P_{T} corresponds to the pressure at which the fuel located inside the fuel tank is required to be stored.

The temperature sensor is located at the fuel tank inlet and helps determining a first temperature value T₁ of the first recirculated fuel mass flow. Said first temperature value T₁ is the temperature of the recirculated fuel mass flow after exiting the heat exchanger and right before injecting the recirculated fuel mass flow back into the fuel tank. That is, in an embodiment, the recirculated fuel mass flow is the fuel mass flow available after the first recirculated fuel mass flow goes through the heat exchanger from which an eventual part of the first recirculated fuel mass flow has been vented out in case the pressure P_{T} inside the fuel tank is higher than a predetermined pressure value Pₘₐₓ.

The temperature sensor is located at the fuel tank inlet in order to provide a precise value of the temperature of the recirculated fuel mass flow right before performing the reinjection of said recirculated fuel mass flow back into the fuel tank. In some cases, if the conduct which fluidically connect the outlet of the heat exchanger and the inlet of fuel tank is substantially long, it is assumed that the temperature can vary between the point at the outlet of the heat exchanger and the point of reinjection back into the fuel tank. In that sense, by placing the temperature sensor at the inlet of the fuel tank, it is ensured that the monitoring of the first temperature value T₁ is performed right before reinjection of the first recirculated fuel mass flow inside the fuel tank.

The controlling means helps processing the pressure value P_{T} and the first temperature value T₁, respectively determined by the pressure sensor and the temperature sensor. At the same time, said controlling means are further configured for raising the power delivered by the heat exchanger if the pressure P_{T} is lower than a determined pressure target P_{TA}, or lowering the power delivered by the heat exchanger if the pressure P_{T} is higher than the determined pressure target P_{TA}, while the first temperature value T₁ is between a first temperature threshold T_{TH1} and a second temperature threshold T_{TH2}.

The first temperature threshold T_{TH1} is predetermined and is equal to the lower temperature threshold which corresponds to the condensation point of the fuel stored in the fuel tank. The second temperature threshold T_{TH2} is predetermined and is equal to the higher temperature threshold which corresponds to the admissible temperature so that the fuel stored in the tank does not exceed standard storage conditions for said particular fuel.

In an embodiment, the pressure target P_{TA} is maintained around 4 bar (400 000 Pa).

In an embodiment, the second temperature threshold T_{TH2} is around 150K.

In an embodiment, the first temperature value T₁ is between 20 to 25K.

Thus, if the pressure P_{T} measured inside the fuel tank is lower than the determined pressure target P_{TA}, the power delivered by the heat exchanger to the first recirculated fuel mass flow is raised so that, when said first recirculated fuel mass flow is injected back into the fuel tank, said first recirculated fuel mass flow helps increasing the pressure inside the fuel tank when reinjected.

On the contrary, if the pressure P_{T} measured inside the fuel tank is higher than the determined pressure target P_{TA}, the power delivered by the heat exchanger to the first recirculated fuel mass flow is lowered so that, when said first recirculated fuel mass flow is injected back into the fuel tank, said first recirculated fuel mass flow helps maintaining the pressure in the fuel tank when reinjected.

In fact, in operating conditions, the fuel initially stored inside the fuel tank is maintained at a specific storage conditions, a specific temperature value and a specific pressure value, the pressure value P_{T}. When the fuel starts being injected from the fuel tank to the distribution line through the fuel tank outlet, the pressure value PT slowly decreases due to the emptying of the fuel tank. Therefore, the fuel distribution system of the present invention helps maintaining a substantially constant pressure in the fuel tank by reinjected a recirculated fuel mass flow having higher or lower pressure than the pressure value P_{T} by modifying the temperature of the recirculated fuel mass flow so that the pressure of the fuel tank is actively and precisely monitored while the aircraft is in-flight.

In an embodiment of the second inventive aspect of the invention, the fuel distribution system further comprises flow regulating means located upstream the heat exchanger, the flow regulating means being configured for regulating the first recirculated fuel mass flow.

In an embodiment, the fuel distribution system further comprises pressure regulating means located upstream the heat exchanger, the pressure regulating means being configured for regulating the pressure of the first recirculated fuel mass flow.

Advantageously, the pressure regulating means helps adapting the pressure of the recirculated fuel mass flow before entering the heat exchanger. Advantageously, the pressure regulating means ensures that the heat exchanger is not damaged due to the fuel mass flow conditions.

In an embodiment of the second inventive aspect of the invention, the pressure regulating means is a pressure regulating valve.

In an embodiment of the second inventive aspect of the invention, the pressure regulating means is a safety valve which allow reducing the pressure of the recirculated fuel mass flow by immediately releasing pressure in the event of an emergency or in case of failure.

In an embodiment, the fuel distribution system further comprises a fuel pump located downstream the fuel tank outlet, the fuel pump being configured for providing fuel from the fuel tank to the distribution line.

In an embodiment, the fuel distribution system comprises a fuel pump located downstream the fuel tank outlet, the fuel pump being configured for providing the first recirculated fuel mass flow to the heat exchanger by means of a secondary circuit in fluidic communication with the first recirculation duct.

In an embodiment, the fuel distribution system further comprises a second recirculation duct located upstream the fuel consuming system and configured for providing a second recirculated fuel mass flow, together with the first recirculated fuel mass flow, to the heat exchanger.

Advantageously, the second recirculated fuel mass flow is outputted from the distribution line by means of a second recirculation duct. Preferably, the second recirculated duct is a tapering duct.

In this embodiment, part of the fuel to be injected in the fuel consuming system is redirected towards the heat exchanger, that is, the second recirculated fuel mass flow. The second recirculated fuel mass flow is combined and mixed with the first recirculated fuel mass flow in order to form only one recirculated fuel mass fuel which is injected into the heat exchanger.

The second recovery duct is in fluidic communication with both the distribution line, the first recovery duct and, by extension, with the heat exchanger.

Also advantageously, in an embodiment, both the first recirculated fuel mass flow and the second recirculated fuel mass flow are directed towards the pressure regulating means before entering the heat exchanger so that the combination of first and second recirculated fuel mass flow reaches optimal pressure conditions before being injected into the heat exchanger.

In an embodiment, an additional recirculated fuel mass flow is drawn off the distribution line towards the heat exchanger from a point of the distribution line which is prior to the point from which the second recirculated fuel mass flow is drawn off. That is, in said embodiment, three recirculated fuel mass flows having different conditions, that is different temperature and/or pressure values, are mixed together and redirected towards the heat exchanger. Advantageously, mixing more than two fuel mass flows at different temperature and pressure conditions helps adapting the conditions of the recirculation fuel mass flow reinjected back into the fuel tank.

In an embodiment, the method further comprises the step of providing a plurality of recirculated fuel mass flow by means of a plurality of respective recirculation duct, and feeding the heat exchanger inlet with the plurality of recirculated fuel mass flow.

Advantageously, the second recirculated fuel mass flow is redirected directly from the fuel pump by means of a second recovery duct, that is, the second recirculated fuel mass flow is part of the fuel injected to the distribution line from the fuel tank. In this embodiment, the fuel distribution system of the invention accepts to lose part of the fuel injected towards the fuel consuming system in order to improve the conditions of the first recirculated fuel mass flow by mixing said first recirculated fuel mass flow with second recirculated fuel mass flow the before injecting both fuel mass flow into the heat exchanger. The second recovery duct is in fluidic communication with both the fuel pump and the first recovery duct.

Also advantageously, both the first recirculated fuel mass flow and the second recirculated fuel mass flow are directed towards the pressure regulating means before entering the heat exchanger so that the mix of first and second recirculated fuel mass flow reach the same pressure conditions before being injected into the heat exchanger.

In an embodiment of the second inventive aspect of the invention, a third fuel mass flow is drawn off the distribution line to the heat exchanger from a point of the distribution line which is prior to the point from which the first recirculated fuel mass flow is drawn off. That is, in said embodiment, three fuel mass flows of different temperature and pressure conditions are mixed together and redirected towards the pressure regulating means and, thus, towards the heat exchanger. Advantageously, mixing more than two fuel mass flows in different temperature and pressure conditions helps monitoring the conditions of the recirculated fuel mass flow reinjected back into the fuel tank.

Overall, mixing the first recirculated fuel mass flow with an additional fuel mass flow, that is either adding a second recirculated fuel mass flow or either a second and a third fuel mass flow, allow to redirect an additional quantity towards the heat exchanger in order to reinject a higher quantity of fuel mass flow back into the fuel tank in case the pressure value PT of the fuel tank is not in an optimal state.

In an embodiment of the second inventive aspect of the invention, the fuel is hydrogen. Particularly, the fuel is di-hydrogen (H₂).

In an embodiment of the second inventive aspect of the invention, the recirculated fuel mass flow injected into the heat exchanger is liquid hydrogen, gas hydrogen or a mix of liquid hydrogen and gas hydrogen.

In an embodiment of the second inventive aspect of the invention, the fuel is in supercritical state. In particular, a supercritical fluid (SCF) is a highly compressed fluid that combines the properties of gases and liquids.

In an embodiment of the second inventive aspect of the invention, the fuel consuming system is an engine or a fuel cell.

In a third inventive aspect, the present invention provides an aircraft comprising any embodiment, or combination thereof, of the second inventive aspect of the invention.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other features and advantages of the invention will be seen more clearly from the following detailed description of preferred embodiments provided only by way of illustrative and non-limiting examples in reference to the attached drawings.
- Figure 1-3: These figures show a fuel distribution system according to embodiments of the invention.
- Figure 4: This figure shows an aircraft according to an embodiment of the invention.

### DETAILED DESCRIPTION OF THE INVENTION

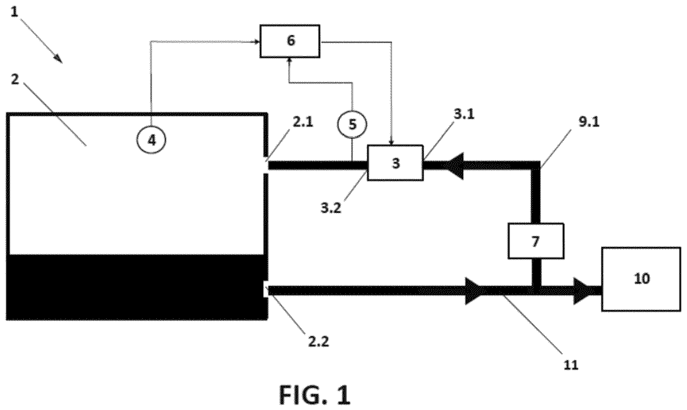

Figure 1-3 show embodiments of the fuel distribution system (1) according to the invention.

Figure 1 shows a first embodiment in which the fuel distribution system (1) comprises a fuel tank (2), the fuel tank is configured for storing fuel at a pressure value P_{T} and the fuel tank (2) has a fuel inlet (2.1) and a fuel outlet (2.2). The fuel outlet (2.2) is fluidically connected to a distribution line (11) suitable for feeding a fuel consuming system (10).

The fuel distribution system (1) also comprises a heat exchanger (3) located upstream the fuel tank inlet (2.1). The heat exchanger (3) has an inlet (3.1) and an outlet (3.2) and said heat exchanger (3) helps providing heat to a first recirculated fuel mass flow provided from the distribution line (11) to the heat exchanger inlet (3.1) by means of a first recirculation duct (9.1). The recirculated fuel mass flow has a temperature value T₁ at the heat exchanger outlet (3.2).

As depicted in figure 1, the fuel distribution system (1) shows a temperature sensor (5) located at the fuel tank inlet (2.1), a pressure sensor (4) located inside the fuel tank (2) and controlling means (6).

The controlling means (6) helps processing the pressure P_{T} and the first temperature T₁ values and, while the first temperature value T₁ is between a first temperature threshold T_{TH1} and a second temperature threshold T_{TH2}, the controlling means (6) are further configured for raising the power delivered by the heat exchanger (3) if the pressure P_{T} is lower than a determined pressure target P_{TA}, or lowering the power delivered by the heat exchanger (3) if the pressure P_{T} is higher than the determined pressure target P_{TA}.

Thus, if the pressure P_{T} measured inside the fuel tank (2) is lower than the determined pressure target P_{TA}, the power delivered by the heat exchanger (3) to the first recirculated fuel mass flow is raised so that, when said first recirculated fuel mass flow is injected back into the fuel tank (2), said first recirculated fuel mass flow helps increasing the pressure inside the fuel tank (2) when reinjected.

On the contrary, if the pressure P_{T} measured inside the fuel tank (2) is higher than the determined pressure target P_{TA}, the power delivered by the heat exchanger (3) to the first recirculated fuel mass flow is lowered so that, when said first recirculated fuel mass flow is injected back into the fuel tank (2), said first recirculated fuel mass flow helps decreasing the pressure inside the fuel tank (2) when reinjected.

In an embodiment, the fuel is hydrogen. Particularly, the fuel is di-hydrogen (H2).

In an embodiment, the fuel consuming system (11) is an engine or a fuel cell.

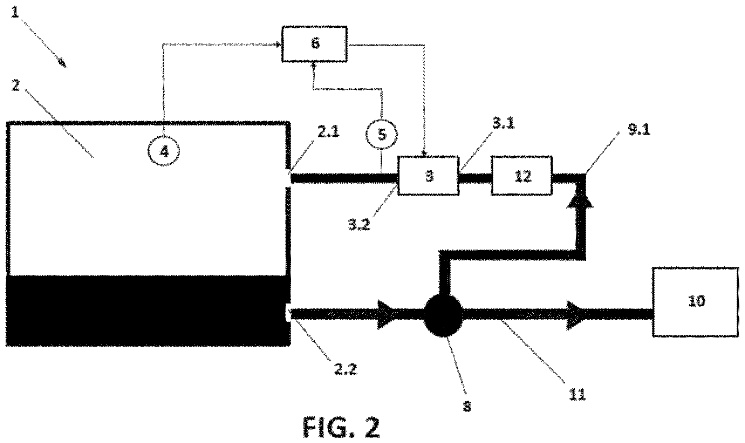

In figure 2, the fuel distribution system (1) only redirects one recirculated fuel mass flow output from the distribution line (11) towards the heat exchanger inlet (3.1). In the embodiment of figure 2, the first recirculated fuel mass flow goes through a pressure regulating means (12) located upstream the heat exchanger (3). Said pressure regulating means (12) are configured for regulating the pressure of the first recirculated fuel mass flow.

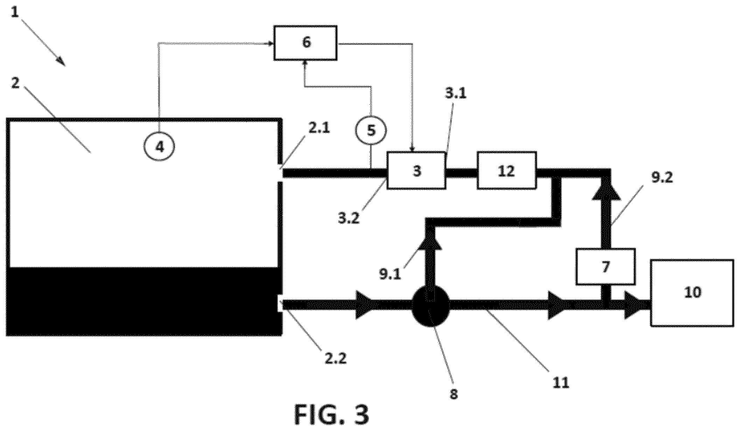

In an embodiment, as shown in figures 2 and 3, the fuel distribution system (1) comprises a fuel pump (8) located downstream the fuel tank outlet (2.2), the fuel pump (8) is configured for providing fuel from the fuel tank (2) to the distribution line (11), and/or providing the first recirculated fuel mass flow to the heat exchanger (3) by means of a secondary circuit in fluidic communication with the first recirculation duct (9.1).

In an embodiment, as shown in figure 3, the fuel distribution system (1) includes pressure regulating means (7) located upstream the heat exchanger (3) and the recirculated fuel mass flow is provided to the pressure regulating means (7) by means of the first recirculation duct (9.1). The regulating means (7) helps regulating the pressure of the recirculated fuel mass flow before injecting said fuel mass flow in the heat exchanger (3) through the heat exchanger inlet (3.1).

In an embodiment, not shown in the set of figures, the pressure regulating (7) means is a pressure regulating valve.

Thanks to the pressure regulating means (7), the pressure of the recirculated fuel mass flow is adapted before entering the heat exchanger (3) which helps increasing or decreasing the pressure of the recirculated fuel mass flow drawn off the distribution line (11) before injection inside the heat exchanger (3). The pressure regulating means (7) ensures that the heat exchanger (3) is not damaged due to the recirculated fuel mass flow pressure and temperature conditions.

In figure 3, the fuel distribution system (1) comprises all the elements of the embodiment shown in figure 2. However, in the fuel distribution system (1) shown in figure 3, a second recirculation duct (9.2) located upstream the fuel consuming system (10) is implemented and said second recirculation duct (9.2) is configured for providing a second recirculated fuel mass flow, together with the first recirculated fuel mass flow, to the heat exchanger (3). The second recirculation duct (9.2) is in fluidic communication with both the distribution line (11) and the inlet of the heat exchanger (3.1).

In this figure, the second recirculated fuel mass flow is drawn off the distribution line (11) of the fuel consuming system (10) by means of the second recirculation duct (9.2) and the first recirculated fuel mass flow is rerouted thanks to the fuel pump (8) thanks to the first recirculation duct (9.1). Preferably, the second recirculation duct (9.2) is a tapering duct.

In an embodiment, not shown in the set of figures, more than two recirculated fuel mass flows are redirected either from the distribution line (11) towards the heat exchanger (3).

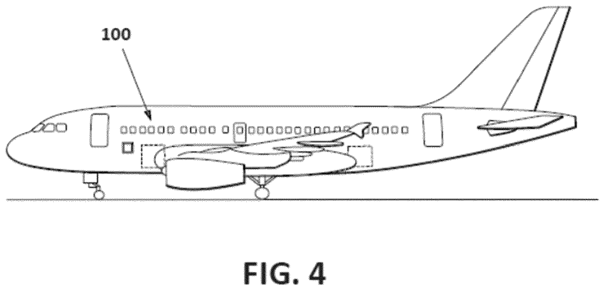

Figure 4 shows an embodiment of an aircraft (100) comprising the fuel distribution system (1) of any of the embodiments above described or any combination of embodiments, with the exception of combinations of such mutually exclusive features.

### Method for maintaining pressure in a fuel tank of a fuel consuming system

In an inventive aspect, the present invention provides a method for maintaining pressure in a fuel tank (2) of an aircraft (100), the fuel tank (2) being suitable for feeding a fuel consuming system (10) through a distribution line (11), the fuel tank (2) having an inlet (2.1) and an outlet (2.2), wherein the method comprises the steps of:
a) injecting a first recirculated fuel mass flow from the distribution line (11) of the fuel consuming system (10) to a heat exchanger (3) by means of a first recirculation duct (9.1), the heat exchanger (3) having an inlet (3.1) and an outlet (3.2),
b) determining a pressure value P_{T} inside the fuel tank (2),
c) determining a first temperature value T₁ of the first recirculated fuel mass flow at the fuel tank inlet (2.1),
d) processing the pressure value P_{T} and the first temperature value T₁ by means of controlling means (6),
e) providing heat to the first recirculated fuel mass flow by means of the heat exchanger (3), and
f) injecting the first recirculated fuel mass flow outputted of the heat exchanger (3) back into the fuel tank (2),
wherein the method further comprises:
while the first temperature value T₁ is between a first temperature threshold T_{TH1} and a second temperature threshold T_{TH2}:
- raising the power delivered by the heat exchanger (3) if the pressure P_{T} is lower than a determined pressure target P_{TA} or
- lowering the power delivered by the heat exchanger (3) if the pressure P_{T} is higher than the determined pressure target P_{TA}.

In an embodiment of the method of the invention, if the first temperature value T₁ is lower than the first temperature threshold T_{TH1}, the method further comprises the steps of:
- raising the power delivered to the heat exchanger (3) if the pressure P_{T} is lower than, or equal to, a predetermined pressure value Pₘₐₓ, or
- releasing to atmosphere at least part of the first recirculated fuel mass flow if the pressure P_{T} is higher than a predetermined pressure value Pₘₐₓ.

In an embodiment of the method of the invention, if the first temperature value T₁ is lower than the first temperature threshold T_{TH1}, the method further comprises the step of lowering the power delivered by the heat exchanger (3) until the pressure P_{T} is lower than the determined pressure target P_{TA}.

In an embodiment of the method of the invention, if the first temperature value T₁ is higher than the second temperature threshold T_{TH2}, the method further comprises the step of increasing the flow of the first recirculated fuel mass flow by means of flow regulating means (7) located upstream the heat exchanger (3) until the first temperature value T₁ is lower than the first threshold.

In an embodiment of the method of the invention, before step e), the method further comprises the step of regulating the pressure and/or the flow of the first recirculated fuel mass flow by means of pressure regulating means (12) located upstream the heat exchanger (3).

In an embodiment, the method further comprises the step of providing fuel from the fuel tank (2) to the distribution line (11) by means of a fuel pump (8) located downstream the outlet (2.2) of the fuel tank (2), the fuel pump (8) comprising a secondary circuit in fluidic communication with the first recirculation duct (9.1).

In an embodiment, the method further comprises the step of providing a second recirculated fuel mass flow by means of a second recirculation duct (9.2), and feeding the heat exchanger inlet (3.1) with the first recirculated fuel mass flow and the second recirculated fuel mass flow.

In an embodiment, the method further comprises the step of determining the value of the first and/or the second recirculated fuel mass flow, and during step d), the method further comprises processing the value of the first and/or the second recirculated fuel mass flow by means of the controlling means (6).

In an embodiment of the method of the invention, the fuel (3) is di-hydrogen.

In an embodiment of the method of the invention, the fuel consuming system (10) comprises an engine and/or a fuel cell.

## Claims

1. Method for maintaining pressure in a fuel tank (2) of an aircraft (100), the fuel tank (2) being suitable for feeding a fuel consuming system (10) through a distribution line (11), the fuel tank (2) having an inlet (2.1) and an outlet (2.2), wherein the method comprises the steps of:
a) injecting a first recirculated fuel mass flow from the distribution line (11) of the fuel consuming system (10) to a heat exchanger (3) by means of a first recirculation duct (9.1), the heat exchanger (3) having an inlet (3.1) and an outlet (3.2),
b) determining a pressure value P_{T} inside the fuel tank (2),
c) determining a first temperature value T₁ of the first recirculated fuel mass flow at the fuel tank inlet (2.1),
d) processing the pressure value P_{T} and the first temperature value T₁ by means of controlling means (6),
e) providing heat to the first recirculated fuel mass flow by means of the heat exchanger (3), and
f) injecting the first recirculated fuel mass flow outputted of the heat exchanger (3) back into the fuel tank (2),
wherein the method further comprises:
while the first temperature value T₁ is between a first temperature threshold T_{TH1} and a second temperature threshold T_{TH2}:
- raising the power delivered by the heat exchanger (3) if the pressure P_{T} is lower than a determined pressure target P_{TA} or
- lowering the power delivered by the heat exchanger (3) if the pressure P_{T} is higher than the determined pressure target P_{TA}.

2. The method according to the preceding claim, wherein, if the first temperature value T₁ is lower than the first temperature threshold T_{TH1}, the method further comprises the steps of:
- raising the power delivered to the heat exchanger (3) if the pressure P_{T} is lower than, or equal to, a predetermined pressure value Pₘₐₓ, or
- releasing to atmosphere at least part of the first recirculated fuel mass flow if the pressure P_{T} is higher than a predetermined pressure value Pₘₐₓ.

3. The method according to claim 1, wherein, if the first temperature value T₁ is lower than the first temperature threshold T_{TH1}, the method further comprises the step of:
- lowering the power delivered by the heat exchanger (3) until the pressure P_{T} is lower than the determined pressure target P_{TA}.

4. The method according to any of the preceding claims, wherein, if the first temperature value T₁ is higher than the second temperature threshold T_{TH2}, the method further comprises the step of:
- increasing the flow of the first recirculated fuel mass flow by means of flow regulating means (7) located upstream the heat exchanger (3) until the first temperature value T₁ is lower than the first threshold.

5. The method according to any of the preceding claims, wherein, before step e), the method further comprises the step of:
- regulating the pressure and/or the flow of the first recirculated fuel mass flow by means of pressure regulating means (12) located upstream the heat exchanger (3).

6. The method according to any of the preceding claims, wherein, the method further comprises the step of providing fuel from the fuel tank (2) to the distribution line (11) by means of a fuel pump (8) located downstream the outlet (2.2) of the fuel tank (2), the fuel pump (8) comprising a secondary circuit in fluidic communication with the first recirculation duct (9.1).

7. The method according to claim 6, wherein, the method further comprises the steps of:
- providing a second recirculated fuel mass flow by means of a second recirculation duct (9.2), and
- feeding the heat exchanger inlet (3.1) with the first recirculated fuel mass flow and the second recirculated fuel mass flow.

8. The method according to any of the preceding claims, wherein the method further comprises the step of:
- determining the value of the first and/or the second recirculated fuel mass flow, and
- during step d), the method further comprises processing the value of the first and/or the second recirculated fuel mass flow by means of the controlling means (6).

9. The method according to any of the preceding claims, wherein the fuel (3) is di-hydrogen.

10. A fuel distribution system (1) for an aircraft (100) comprising:
- a fuel tank (2) having a fuel tank inlet (2.1) and a fuel tank outlet (2.2), the fuel tank (2) being configured for storing fuel at a pressure value P_{T} and the fuel tank outlet (2.2) being fluidically connected to a distribution line (11) suitable for feeding a fuel consuming system (10) of an aircraft (100),
- a first recirculation duct (9.1) configured for injecting a first recirculated fuel mass flow from the distribution line (11) to a heat exchanger (3),
- the heat exchanger (3), having an inlet (3.1) and an outlet (3.2), located upstream the fuel tank inlet (2.1) and being configured for providing heat to the first recirculated fuel mass flow provided from the distribution line (11),
- a temperature sensor (5) adapted to measure a first temperature value T₁ of the first recirculated fuel mass flow upstream the fuel tank inlet (2.1),
- a pressure sensor (4) adapted to measure a pressure value P_{T} inside the fuel tank (2),
- controlling means (6) configured for processing the pressure P_{T} and the first temperature T₁ values and, while the first temperature value T₁ is between a first temperature threshold T_{TH1} and a second temperature threshold T_{TH2}, the controlling means (6) are further configured for:
∘ raising the power delivered by the heat exchanger (3) if the pressure P_{T} is lower than a determined pressure target P_{TA}, or
∘ lowering the power delivered by the heat exchanger (3) if the pressure P_{T} is higher than the determined pressure target P_{TA}.

11. The fuel distribution system (1) according to claim 10 further comprising flow regulating means (7) located upstream the heat exchanger (3), the flow regulating means (7) being configured for regulating the first recirculated fuel mass flow.

12. The fuel distribution system (1) according to claim 10 or 11 further comprising pressure regulating means (12) located upstream the heat exchanger (3), the pressure regulating means (12) being configured for regulating the pressure of the first recirculated fuel mass flow.

13. The fuel distribution system (1) according to any of claims 10 to 12 further comprising a fuel pump (8) located downstream the fuel tank outlet (2.2), the fuel pump (8) being configured for:
- providing fuel from the fuel tank (2) to the distribution line (11), and/or
- providing the first recirculated fuel mass flow to the heat exchanger (3) by means of a secondary circuit in fluidic communication with the first recirculation duct (9.1).

14. The fuel distribution system (1) according to any of claims 10 to 13 further comprising a second recirculation duct (9.2) located upstream the fuel consuming system (10) and configured for providing a second recirculated fuel mass flow, together with the first recirculated fuel mass flow, to the heat exchanger (3)

15. An aircraft (100) comprising the fuel distribution system (1) according to any of claims 10 to 14.
